# EUROPEAN PATENT APPLICATION

(11) **EP 4 848 790 A1**
(43) Date of publication of application: **02.12.2026**
(21) Application number: 24919326.9
(22) Date of filing: 25.01.2024
(51) Int. Cl.: H04W 24/10

(54) **CHANNEL STATE INFORMATION REPORTING METHOD AND APPARATUS, AND CHANNEL STATE INFORMATION CONFIGURATION METHOD AND APPARATUS**

(71) Applicant: 1FINITY INC., Kawasaki-shi, Kanagawa 211-8588 (JP)
(72) Inventor: ZHANG, Jian, Beijing 100022 (CN); WANG, Guotong, Beijing 100022 (CN); ZHANG, Qun, Beijing 100022 (CN); ZHAO, Di, Beijing 100022 (CN); WANG, Xin, Beijing 100022 (CN); LU, Yiwen, Beijing 100022 (CN)
(74) Representative: Haseltine Lake Kempner LLP
(86) International application number: PCT/CN2024/074102
(87) International publication number: WO 2025/156217

(57) **Abstract**

Embodiments of this disclosure provide a channel state information reporting method and apparatus and a configuration method and apparatus. The method includes: receiving configuration information by a terminal equipment; and transmitting at least one of an event-triggered CSI report, a CSI report, an event-triggered LTM CSI report and an LTM CSI report by the terminal equipment, a priority of the event-triggered CSI report being higher than that of the CSI report.

## Description

### Technical Field

This disclosure relates to the field of communication technologies.

### Background

5G NR supports channel state information (CSI) reporting. For example, a CSI report may include at least one of a CSI-RS resource indicator (CRI), an SSB resource indicator (SSBRI), L1-RSRP, and an L1-SINR, that is, a beam-related report is included. A terminal equipment transmits a beam report to a network device, and the network device may perform beam management accordingly, such as indicating better beams to the terminal equipment. When the terminal equipment transmits the CSI report is determined by the network device. The network device may configure a periodic CSI report, such that the terminal equipment periodically transmits the CSI report; the network device may configure a semi-persistent CSI report, and after the semi-persistent CSI report is activated by the network device, the terminal equipment periodically transmits the CSI report; and the network device may configure an aperiodic CSI report, and after the aperiodic CSI report is triggered by the network device, the terminal equipment transmits the CSI report once. The CSI report includes a measurement result for a serving cell. Supporting ICBM (inter-cell beam management) is newly added to Rel-17. In ICBM, the CSI report may include a measurement result for a non-serving cell, such that the network device may instruct the terminal equipment to use beams of the non-serving cell, but the terminal equipment is not switched to a non-serving cell.

Supporting LTM CSI reporting is newly added to Rel-18. Rel-18 supports LTM (L1/L2 triggered mobility), in which a terminal equipment may transmit an LTM CSI report. The Rel-18 LTM CSI report includes SSBRI and L1-RSRP. Different from the legacy CSI report described above, the LTM CSI report includes a measurement result of a candidate cell. According to the measurement result, the network device may determine beams for the terminal equipment for use in the candidate cell, and indicate the beams to the terminal equipment before the terminal equipment is switched to the candidate cell, so that the terminal equipment is able to quickly apply a suitable beam for data transmission after switch. In other words, in LTM, the terminal equipment is switched to the candidate cell, and uses a beam of the candidate cell after switch. Similarly, the terminal equipment may transmit the LTM CSI report periodically or semi-persistently or aperiodically.

It should be noted that the above description of the background art is merely provided for clear and complete explanation of this disclosure and for easy understanding by those skilled in the art. And it should not be understood that the above technical solution is known to those skilled in the art as it is described in the background art of this disclosure.

### Summary

In upcoming Rel-19, further enhancements for CSI reports and LTM CSI reports will be introduced, that is, event-triggered CSI reports and event-triggered LTM CSI reports will be supported. The event-triggered CSI reports and the event-triggered LTM CSI reports respectively correspond to the legacy CSI reports and the LTM CSI reports. Unlike the legacy reports described above, for an event-triggered report, when the terminal equipment transmits the report is determined by the terminal equipment, it is triggered by an event. In other words, the terminal equipment transmits the report only when necessary, so that the report may be timely transmitted. In addition, as unnecessary reporting is avoided, reporting overhead may also be reduced. How to support the event-triggered CSI reports and the event-triggered LTM CSI reports is a problem needing to be solved. At present, Rel-19 has been established in 3GPP, and technical details relating to the event-triggered CSI reports and event-triggered LTM CSI reports have not yet been discussed.

It was found by the inventors that a terminal equipment may be configured with one or more reports scheduled by a network device ("a CSI report" and "an LTM CSI report" are collectively referred to as "a network device scheduled report"). For example, for network device scheduled reports, different reports may be associated with different CSI measurement resources, and/or have different report types (periodic, aperiodic, semi-persistent). Existing standards define priorities of the network device scheduled reports, so that a precedence relationship between the network device scheduled reports may be determined. Similarly, the terminal equipment may be configured with one or more event-triggered reports ("an event-triggered CSI report" and "an event-triggered LTM CSI report" are collectively referred to as "an event-triggered report"). For example, different event-triggered reports are associated with different CSI measurement resources, and/or associated with different events, and/or associated with different report quantities.

However, how to determine a priority of an event-triggered report, including how to determine a precedence relationship between an event-triggered report and a network device scheduled report and how to determine a precedence relationship between event-triggered reports, are issues that need to be solved. For example, if the terminal equipment needs to select a report ("a network device scheduled report" and "an event-triggered report" are collectively referred to as "a report") from an event-triggered report and a network device scheduled report for transmission, which report is transmitted preferentially is an issue that needs to be solved. Otherwise, the terminal equipment and the network device may have inconsistent understanding of which report is transmitted, thus causing a failure of transmission of the entire report.

In order to solve at least one of the above problems, embodiments of this disclosure provide a channel state information reporting method and apparatus and a configuration method and apparatus.

According to a first aspect of the embodiments of this disclosure, there is provided a channel state information (CSI) reporting apparatus, provided in a terminal equipment, the apparatus including:
a first receiving unit configured to receive configuration information; and
a first transmitting unit configured to transmit at least one of an event-triggered CSI report, a CSI report, an event-triggered LTM CSI report and an LTM CSI report, a priority of the event-triggered CSI report being higher than that of the CSI report.

According to a second aspect of the embodiments of this disclosure, there is provided a configuration apparatus, provided in a network device, the apparatus including:
a second transmitting unit configured to transmit configuration information to a terminal equipment; and
a second receiving unit configured to receive at least one of an event-triggered CSI report, a CSI report, an event-triggered LTM CSI report and an LTM CSI report from the terminal equipment, a priority of the event-triggered CSI report being higher than that of the CSI report.

According to a third aspect of the embodiments of this disclosure, there is provided a communication system, including a terminal equipment and/or a network device, the terminal equipment including the apparatus as described in the embodiment of the first aspect of this disclosure, and the network device including the apparatus as described in the embodiment of the second aspect of this disclosure.

According to a fourth aspect of the embodiments of this disclosure, there is provided a channel state information (CSI) reporting method, the method including:
receiving configuration information by a terminal equipment; and
transmitting at least one of an event-triggered CSI report, a CSI report, an event-triggered LTM CSI report and an LTM CSI report by the terminal equipment, a priority of the event-triggered CSI report being higher than that of the CSI report.

According to a fifth aspect of the embodiments of this disclosure, there is provided a configuration method, the method including:
transmitting configuration information by a network device to a terminal equipment; and
receiving at least one of an event-triggered CSI report, a CSI report, an event-triggered LTM CSI report and an LTM CSI report by the network device from the terminal equipment, a priority of the event-triggered CSI report being higher than that of the CSI report.

According to a sixth aspect of the embodiments of this disclosure, there is provided a computer readable program code, which, when executed in a channel state information reporting apparatus or a terminal equipment, will cause the channel state information reporting apparatus or the terminal equipment to carry out the channel state information reporting method as described in the embodiment of the fourth aspect of this disclosure.

According to a seventh aspect of the embodiments of this disclosure, there is provided a computer readable program code, which, when executed in a channel state information reporting apparatus or a network device, will cause the channel state information reporting apparatus or the network device to carry out the channel state information reporting method as described in the embodiment of the fifth aspect of this disclosure.

According to an eighth aspect of the embodiments of this disclosure, there is provided a computer readable medium, including a computer readable program code, which will cause a channel state information reporting apparatus or a terminal equipment to carry out the channel state information reporting method as described in the embodiment of the fourth aspect of this disclosure.

According to a ninth aspect of the embodiments of this disclosure, there is provided a computer readable medium, including a computer readable program code, which will cause a channel state information reporting apparatus or a network device to carry out the channel state information reporting method as described in the embodiment of the fifth aspect of this disclosure.

An advantage of the embodiments of this disclosure exists in that by determining priorities of event-triggered reports, ambiguities generated in determining the priorities of the reports may be avoided, and failures in transmission of the reports caused thereby may also be avoided.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a communication system of an embodiment of this disclosure;
FIG. 2 is a schematic diagram of a channel state information reporting method of an embodiment of this disclosure;
FIG. 3 is a schematic diagram of an association between an event-triggered CSI report and a CSI report and a CSI resource configuration of an embodiment of this disclosure;
FIG. 4 is a schematic diagram of a relationship between resources used for transmitting an event-triggered CSI report and a CSI report of an embodiment of this disclosure;
FIG. 5 is a schematic diagram of a priority-based report transmission mechanism of an embodiment of this disclosure;
FIG. 6 is a schematic diagram of an implementation of the channel state information reporting method of the embodiment of this disclosure;
FIG. 7 is a schematic diagram of a configuration method of an embodiment of this disclosure;
FIG. 8 is an interaction graph of the channel state information reporting method of the embodiment of this disclosure;
FIG. 9 is a schematic diagram of a channel state information reporting apparatus of an embodiment of this disclosure;
FIG. 10 is a schematic diagram of a configuration apparatus of an embodiment of this disclosure;
FIG. 11 is a block diagram of a systematic structure of a terminal equipment of an embodiment of this disclosure; and
FIG. 12 is a block diagram of a systematic structure of a network device of an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and NEW Radio (NR) in the future, etc., and/or other communication protocols that are currently known or will be developed in the future.

In the embodiments of this disclosure, the term "network device" or "network node", for example, refers to a device in a communication system that accesses a user equipment to the communication network and provides services for the user equipment. The network device or network node may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the gNB DU is a logical node of the gNB having a part of functions of the gNB. And a term "cell" may refer to a base station and/or its coverage area, depending on a context of the term. One gNB-DU supports one or more cells, and one cell is supported by one gNB-DU only.

In the embodiments of this disclosure, the term "user equipment (UE)" refers to, for example, an equipment accessing to a communication network and receiving network services via a network device, may also be referred to as "terminal equipment (TE)". The terminal equipment may be fixed or mobile, and may also be referred to as a mobile station (MS), a terminal, a subscriber station (SS), an access terminal (AT), such as a terminal equipment supported by an IAB-node or IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "when...", "in a case of...", "for a case where..." and "if" all indicate being based on one or more conditions or states, and in addition, these expressions are interchangeable.

Scenarios of the embodiments of this disclosure shall be described below by way of examples; however, this disclosure is not limited thereto.

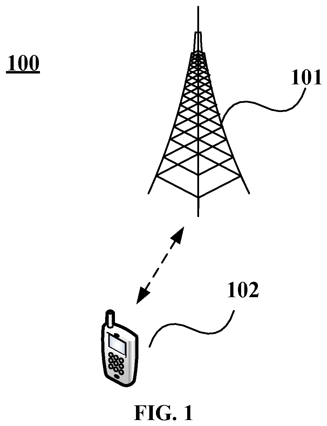

FIG. 1 is a schematic diagram of a communication system of an embodiment of this disclosure, in which a case where a terminal equipment and a network device are taken as examples is schematically shown. As shown in FIG. 1, a communication system 100 may include a network device 101 and a terminal equipment 102. For the sake of simplicity, an example having only one terminal equipment and one network device is schematically given in FIG. 1; however, the embodiment of this disclosure is not limited thereto.

In the embodiment of this disclosure, existing services or services that may be implemented in the future may be performed between the network device 101 and the terminal equipment 102. For example, such services may include but not limited to an enhanced mobile broadband (eMBB), massive machine type communication (mMTC), and ultra-reliable and low-latency communication (URLLC), etc.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). high layer signaling may also be, for example, medium access control (MAC) signaling, or a MAC control element (MAC CE); however, this disclosure is not limited thereto.

Implementations of the embodiments of this disclosure shall be described below with reference to the accompanying drawings; however, these implementations are illustrative only, and are not intended to limit this disclosure.

### Embodiment of a first aspect

The embodiment of this disclosure provides a channel state information reporting method, applicable to a terminal equipment, such as the terminal equipment 102 in FIG. 1.

In the embodiment of this disclosure, "a CSI report" and "an LTM CSI report" are collectively referred to as "a network device scheduled report", "an event-triggered CSI report" and "an event-triggered LTM CSI report" are collectively referred to as "an event-triggered report", and "a network device scheduled report" and "an event-triggered report" are collectively referred to as "a report".

For example, a report includes at least one of a CSI report, an LTM CSI report, an event-triggered CSI report, and an event-triggered LTM CSI report.

For example, an event-triggered report includes at least one of an event-triggered CSI report and an event-triggered LTM CSI report, and a network device scheduled report includes at least one of a CSI report and an LTM CSI report.

In the embodiment of this disclosure, "an event-triggered report" is "a report that is triggered by an event".

In the embodiment of this disclosure, "event-triggered" may be replaced with "UE-initiated" or "event-driven."

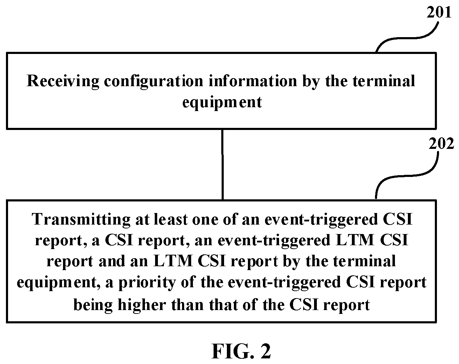

FIG. 2 is a schematic diagram of the channel state information reporting method of the embodiment of this disclosure. As shown in FIG. 2, the method includes:
201: receiving configuration information by the terminal equipment; and
202: transmitting at least one of an event-triggered CSI report, a CSI report, an event-triggered LTM CSI report and an LTM CSI report by the terminal equipment, a priority of the event-triggered CSI report being higher than that of the CSI report.

In operation 201, the terminal equipment receives the configuration information from a network device, the configuration information is configuration information about CSI reporting.

For example, the configuration information includes at least one piece of the following configuration information:
an event-triggered CSI resource configuration;
an event-triggered CSI report configuration;
an event-triggered LTM CSI resource configuration;
an event-triggered LTM CSI report configuration;
a CSI resource configuration;
a CSI report configuration;
an LTM CSI resource configuration; and
an LTM CSI report configuration.

In operation 202, the terminal equipment transmits at least one of an event-triggered CSI report, a CSI report, an event-triggered LTM CSI report and an LTM CSI report, for example, the terminal equipment transmits at least one of the event-triggered CSI report, the CSI report, the event-triggered LTM CSI report and the LTM CSI report according to the above configuration information.

When at least one of the event-triggered CSI report, the CSI report, the event-triggered LTM CSI report and the LTM CSI report is transmitted, it is transmitted according to priorities of event-triggered reports. For example, the transmission is performed according to a precedence relationship between the event-triggered reports and a network device scheduled report and/or a precedence relationship between the event-triggered reports.

In some embodiments, that "priority is high" means "being transmitted preferentially", for example, that a priority of report A is higher than that of report B means that report A is transmitted preferentially to report B.

In some embodiments, a priority of the event-triggered report is higher than that of the network device scheduled report.

For example, a priority of the event-triggered CSI report is higher than that of the CSI report. Both the CSI report and the event-triggered CSI report are used for intra-cell and inter-cell beam management. The terminal equipment may be simultaneously configured with a CSI report and an event-triggered CSI report. The CSI report belongs to a network device scheduled report, and the event-triggered CSI report belongs to a report initiated by the terminal equipment. As the terminal equipment is able to learn beam changes earlier than the network device, the report initiated by the terminal equipment is able to notify the beam changes more timely and accurately. Therefore, the event-triggered CSI report takes precedence over the CSI report. For example, when the terminal equipment needs to select one of the event-triggered CSI report and the CSI report to transmit, the terminal equipment transmits the event-triggered CSI report and does not transmit the CSI report, that is, it preferentially transmits the event-triggered CSI report.

For example, the priority of the event-triggered LTM CSI report is higher than that of the LTM CSI report. Both the LTM CSI report and the event-triggered LTM CSI report are used for cell switch. The terminal equipment may simultaneously be configured with the LTM CSI report and the event-triggered LTM CSI report. As the terminal equipment is able to learn inter-cell beam changes earlier than the network device, the report initiated by the terminal equipment is able to notify the inter-cell beam changes more timely and accurately. Therefore, the event-triggered LTM CSI report takes precedence over the LTM CSI report.

In some embodiments, the priority of the LTM CSI report is higher than that of the event-triggered CSI report.

The LTM CSI report is used for cell switch. The event-triggered CSI report is used for intra-cell and inter-cell beam association, but is not used for the purpose of cell switch. The LTM CSI report is configurable. If cell switch is not needed, the network device does not need to configure the LTM CSI report for the terminal equipment. The reason why the network device configures the LTM CSI report for the terminal equipment is that it deems that the terminal equipment is likely to need cell switch. Once the network device configures the terminal equipment to transmit the LTM CSI report, it indicates that cell switch is a current main purpose. Therefore, the LTM CSI report used for cell switch should take precedence over the event-triggered CSI report that is not used for cell switch. For example, when the terminal equipment needs to select one of the event-triggered CSI report and the LTM CSI report to transmit, the terminal equipment preferentially transmits the LTM CSI report.

In some embodiments, the priorities correspond to priority values, and the smaller the priority values, the higher the priorities.

For example, a report has a priority value, and a report with a smaller priority value takes precedence over a report with a larger priority value. The "report" here may be at least one of an event-triggered CSI report, a CSI report, an event-triggered LTM CSI report and an LTM CSI report.

For example, an event-triggered CSI report with a smaller priority value takes precedence over an event-triggered CSI report with a larger priority value, or a CSI report with a smaller priority value takes precedence over a CSI report with a larger priority value, or an event-triggered CSI report with a smaller priority value takes precedence over a CSI report with a larger priority value, or a CSI report with a smaller priority value takes precedence over an event-triggered CSI report with a larger priority value.

However, in some embodiments, it may also be that the larger the priority values, the higher the priorities.

Different methods for determining priority values of different types of reports shall be described below in detail.

In some embodiments, the priority value of the event-triggered CSI report and the priority value of the CSI report are determined according to at least one of a first parameter, a second parameter, a third parameter and a fourth parameter,
wherein the first parameter is determined according to a report type, the second parameter is determined according to a report quantity, the third parameter is determined according to a cell index, and the fourth parameter is determined according to a report configuration number.

The report configuration number may also be referred to as a report configuration number.

For example, the priority value of the event-triggered CSI report and the priority value of the CSI report are determined according to *y*, *k*, *c* and *s*, wherein *y* is determined according to the report type, *k* is determined according to the report quantity, *c* is determined according to the cell index, and *s* is determined according to the report configuration number.

In some embodiments, a value of the first parameter of the event-triggered CSI report is different from a value of the first parameter of the CSI report.

For example, *y* values of the event-triggered CSI report and the CSI report are different.

In some embodiments, the event-triggered CSI report configuration used for configuring the event-triggered CSI report and the CSI report configuration used for configuring the CSI report are numbered together.

For example, s of the event-triggered CSI report configuration and s of the CSI report configuration are numbered together within an interval [0, *Mₛ* - 1].

Detailed explanation is given below by way of example.

For example, both the priority value of the event-triggered CSI report and the priority value of the CSI report are determined according to formula (1). ${Pri}_{iCSI} \left(y, k, c, s\right) = {M}_{k} ⋅ {M}_{c} ⋅ {M}_{s} ⋅ y + {M}_{c} ⋅ {M}_{s} ⋅ k + {M}_{s} ⋅ c + s$ (1);
where, y denotes a report type. For example, for the event-triggered CSI report, *y* = 0, and for the CSI report, *y* > 0. The CSI report includes an aperiodic CSI report, a semi-persistent CSI report and a periodic CSI report. More specifically, for an aperiodic CSI report carried by a physical uplink shared channel (PUSCH), *y* = 1; for a semi-persistent CSI report carried by a PUSCH, *y* = 2; for a semi-persistent CSI report carried by a physical uplink control channel (PUCCH), y = 3; and for a periodic CSI report carried by a PUCCH, *y* = 4;
*k* denotes a report quantity, and *Mₖ* - 1 denotes a maximum value of *k* ( 0 ≤ *k* ≤ *Mₖ* - 1); for example, for a report carrying L1-RSRP or an L1-SINR (signal to interference plus noise ratio), *k* = 0, and for a report not carrying L1-RSRP or an L1-SINR, *k* = 1 , and *Mₖ* = 2 ; in the description of formula (1), the "report" mentioned may be an event-triggered CSI report, or may be a CSI report; for example, for the event-triggered CSI report, *k* = 0, and for the CSI report, for a report carrying L1-RSRP or an L1-SINR, *k* = 0, and for a report not carrying L1-RSRP or an L1-SINR, *k* = 1, and *Mₖ* = 2;
*c* denotes a cell index, and *M_{c}* - 1 denotes a maximum value of *c* (0 ≤ *c* ≤ *M_{c}* - 1); for example, *M_{c}* is a parameter maxNrofServingCells configured by a high layer, i.e. a maximum number of serving cells; for example, *c* indicates that the report includes a measurement result for a cell *c* , i.e. a measurement resource associated with the report is within the cell *c*; for example, *c* denotes a cell in which the report is located, that is, the report is transmitted on the cell *c*;
*s* denotes a report configuration number, and *Mₛ*-1 denotes a maximum value of *s* (0 ≤ *s* ≤ *Mₛ* -1 ); for example, for the event-triggered CSI report or the CSI report, *s* is a parameter CSI-ReportConfigId configured by a high layer, and *Mₛ* is a parameter maxNrofCSI-ReportConfigurations configured by a high layer, that is, the event-triggered CSI report configuration and the CSI report configuration are numbered together; in other words, the report configuration numbers of both the event-triggered CSI report and the CSI report are determined by CSI-ReportConfigId; where, 0 ≤ CSI-ReportConfigId ≤ maxNrofCSI-ReportConfigurations-1.

In some embodiments, the priority value of the event-triggered CSI report is determined according to at least one of a fifth parameter and a sixth parameter, wherein the fifth parameter is determined according to a cell index, and the sixth parameter is determined according to a report configuration number;
the priority value of the CSI report is determined according to at least one of a seventh parameter, an eighth parameter, a ninth parameter and a tenth parameter, wherein the seventh parameter is determined according to a report type, the eighth parameter is determined according to a report quantity, the ninth parameter is determined according to a cell index, and the tenth parameter is determined according to a report configuration number.

For example, the priority value of the event-triggered CSI report is determined according to *c*₀ and *s*₀, wherein *c*₀ is determined according to an event-triggered CSI report cell index, and *s*₀ is determined according to an event-triggered CSI report configuration number; the priority value of the CSI report is determined according to *y*₁, *k*₁, *c*₁ and *s*₁, wherein *y*₁ is determined according to the CSI report type, *k*₁ is determined according to the CSI report quantity, *c*₁ is determined according to the CSI report cell index, and *s*₁ is determined according to the CSI report configuration number.

In some embodiments, the event-triggered CSI report configuration used for configuring the event-triggered CSI report and the CSI report configuration used for configuring the CSI report are numbered separately.

For example, *s*₀ of the event-triggered CSI report configuration is numbered within an interval [0, *M*_{*s*0} - 1], and *s*₁ of the CSI report configuration is numbered within an interval [0, *M*_{*s*1} - 1].

Following description shall be given below by way of another example.

For example, the priority value of the event-triggered CSI report and the priority among event-triggered CSI reports are determined according to formula (2). ${Pri}_{iCSI} \left({c}_{0}, {s}_{0}\right) = {M}_{{s}_{0}} ⋅ {c}_{0} + {s}_{0}$ (2);
where, *s*₀, denotes an event-triggered CSI report configuration number, and *M*_{*s*0} - 1 denotes a maximum value of *s*₀ (0 ≤ *s*₀ ≤ *M*_{*s*0} - 1); for example, for the event-triggered CSI report, *s*₀ is a parameter EventTriggered-CSI-ReportConfigId configured by a high layer, and *M*_{*s*0} is a parameter maxNrofEventTriggered-CSI-ReportConfigurations configured by a high layer; according to a definition of *s*₀, the event-triggered CSI report configuration and the CSI report configuration are numbered separately;
*c*₀ denotes a cell index, and *M*_{*c*0} - 1 denotes a maximum value of *c* ( 0 ≤ *c*₀ ≤ *M*_{*c*0} - 1 ); for example, *M*_{*c*0} is a parameter maxNrofServingCells configured by a high layer, i.e. a maximum number of serving cells; for example, *c*₀ indicates that the report includes a measurement result for a cell *c*₀, i.e. a measurement resource associated with the report is within the cell *c*₀; for example, *c*₀ denotes a cell in which the report is located, that is, the report is transmitted on the cell *c*₀.

For example, the event-triggered CSI report takes precedence over the CSI report, and the priority value of the CSI report and a priority between CSI reports are determined according to formula (3). ${Pri}_{iCSI} \left({y}_{1}, {k}_{1}, {c}_{1}, {s}_{1}\right) = {M}_{{k}_{1}} ⋅ {M}_{{c}_{1}} ⋅ {M}_{{s}_{1}} ⋅ {y}_{1} + {M}_{{c}_{1}} ⋅ {M}_{{s}_{1}} ⋅ {k}_{1} + {M}_{{s}_{1}} ⋅ {c}_{1} + {s}_{1}$ (3);
where, *y*₁ denotes a CSI report type; for example, for an aperiodic CSI report carried by a PUSCH, *y*₁, = 0, for a semi-persistent CSI report carried by a PUSCH, *y*₁, = 1, for a semi-persistent CSI report carried by a PUCCH, *y*₁, = 2, and for a periodic CSI report carried by a PUCCH, *y*₁, = 3;
definitions of *k*₁, *c*₁ and *s*₁, are similar to those of *k, c* and *s*, respectively, with a difference that *k*₁, *c*₁ and *s*₁, are defined only for the CSI report (only within a range of the CSI report). In addition, according to the definition of *s*₁, the eventtriggered CSI report configuration and the CSI report configuration are numbered separately.

In some embodiments, a mapping order of reports is determined according to priorities, or, when a report code rate is higher than a threshold, a part of transmitted reports are determined according to priorities,
and the reports include at least one of an event-triggered CSI report, a CSI report, an event-triggered LTM CSI report and an LTM CSI report.

For example, priorities or priority values of the reports are used to determine a mapping order of the reports, or are used to omit a part of the reports when a report code rate is higher than a threshold. For example, an uplink transmission may carry multiple reports, and when multiple reports are multiplexed on a PUCCH or PUSCH for transmission, the multiple reports may be arranged in a descending order of priorities (i.e. the mapping order is determined by the priorities), and the terminal equipment transmits all the reports. For example, when multiple reports are multiplexed on a PUCCH or PUSCH for transmission, it may possibly result in that a code rate of the reports are higher than a threshold, thereby resulting in a failure in transmission of the reports, in which case the terminal equipment may select a part of the reports in a descending order of the priorities for transmission, i.e. omit (not transmit) the remaining reports, thereby ensuring that the report code rate is less than or equal to the threshold and thus ensuring transmission reliability.

In some embodiments, when the event-triggered CSI report and the CSI report associated with the same group of CSI measurement resources need to be transmitted simultaneously, the event-triggered CSI report is transmitted and the CSI report is not transmitted, and/or, when the event-triggered LTM CSI report and the LTM CSI report associated with the same group of LTM CSI measurement resources need to be transmitted simultaneously, the event-triggered LTM CSI report is transmitted and the LTM CSI report is not transmitted.

For example, when the event-triggered CSI report and the CSI report associated with the same group of CSI measurement resources need to be transmitted simultaneously, the terminal equipment transmits only the event-triggered CSI report and does not transmit the CSI report. Likewise, this may also be extended to the case where the event-triggered LTM CSI report and the LTM CSI report are transmitted.

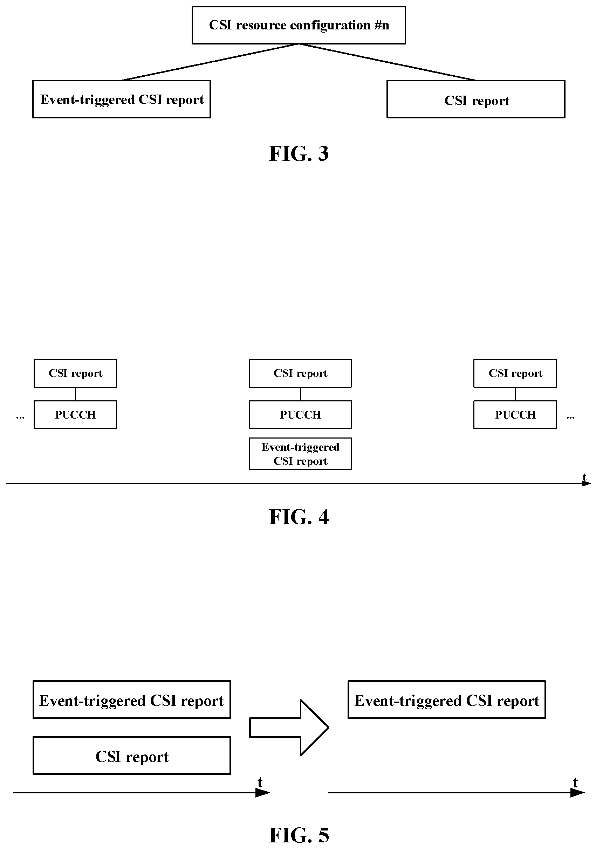

For example, FIG. 3 is a schematic diagram of an association between the eventtriggered CSI report and the CSI report and the CSI resource configuration of the embodiment of this disclosure. In addition, following is an example of the association relationship between report configuration and resource configurations.

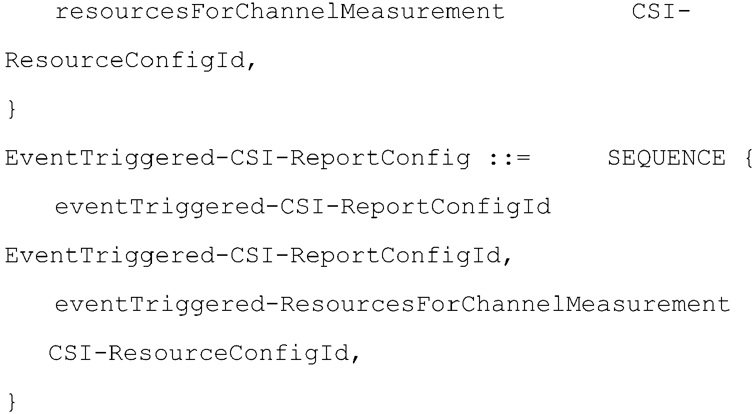

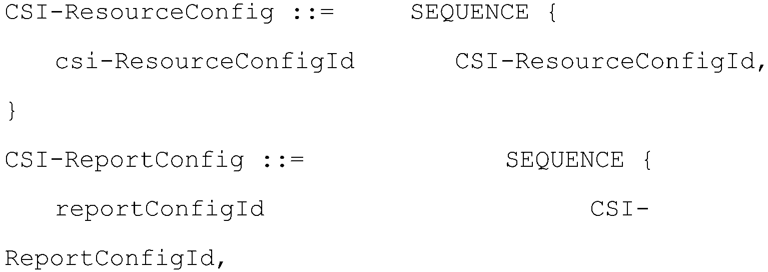

As shown in FIG. 3 and the above example, an event-triggered CSI report (configured by EventTriggered-CSI-ReportConfig) and a CSI report (configured by CSI-ReportConfig) are associated with the same CSI resource configuration, and the CSI resource configuration is configured by CSI-ResourceConfig, with an CSI resource configuration ID (CSI-ResourceConfigId) that is #n.

FIG. 4 is a schematic diagram of a relationship between resources used for transmitting the event-triggered CSI report and the CSI report of the embodiment of this disclosure. As shown in FIG. 4, the resources for transmitting the event-triggered CSI report and the CSI report overlap in the time domain and/or frequency domain, and the CSI report in FIG. 4 is a periodic CSI report carried by a PUCCH.

According to FIG. 3, FIG. 4 and the above example, the terminal equipment needs also to transmit the CSI report while transmitting the event-triggered CSI report, i.e. transmit two reports. However, as both the event-triggered CSI report and the CSI report are reports of measurement results for the same group of CSI resources (corresponding to the same CSI resource configuration), information reported by the two reports is repetitive or redundant. Therefore, the terminal equipment may transmit only one report, and does not need to transmit two reports.

FIG. 5 is a schematic diagram of a priority-based report transmission mechanism of the embodiment of this disclosure. As shown in FIG. 5, taking that the eventtriggered CSI report takes precedence over the CSI report into account, the terminal equipment transmits only the event-triggered CSI report, and does not transmit the CSI report.

In some embodiments, the event-triggered CSI report and/or the event-triggered LTM CSI report is/are transmitted via DCI scheduling.

For example, the event-triggered CSI report or the event-triggered LTM CSI report is transmitted in a PUSCH scheduled by DCI. For example, after an event occurs, the terminal equipment notifies the network device, the network device schedules the terminal equipment via the DCI to transmit the PUSCH, and the event-triggered report is included in the PUSCH and transmitted, wherein "the event-triggered report" refers to "the event-triggered CSI report" or "the event-triggered LTM CSI report", abbreviated as "an event-triggered report".

In some embodiments, the event-triggered CSI report is carried by UCI or a MAC-CE, and/or the event-triggered LTM CSI report is carried by UCI or a MAC-CE.

For example, the event-triggered report is carried by UCI, and the UCI is multiplexed onto a PUSCH without UL-SCH for transmission.

For example, the event-triggered report is carried by UCI, and the UCI is multiplexed onto a PUSCH with UL-SCH for transmission.

For example, the event-triggered report is carried by a MAC-CE, and the MAC-CE is included in a PUSCH for transmission.

Following description shall be given below by way of an example.

For example, the terminal equipment needs to simultaneously transmit the following four types of reports:
an event-triggered CSI report R1;
a CSI report R2, wherein R2 and R1 are associated with the same group of CSI measurement resources;
a CSI report R3, wherein R3 and R1 are associated with two different groups of CSI measurement resources; and
an LTM CSI report R4.

As R2 and R1 are associated with the same group of CSI measurement resources, the terminal equipment does not transmit R2. Regardless of whether a code rate the report is higher than the threshold, the terminal equipment does not transmit R2. If the code rate of report is higher than the threshold, the terminal equipment selects a report from R1, R3 and R4 in a descending order of priorities to transmit, until the code rate of the report is maximum under a condition of being less than or equal to the threshold. The priorities of R1, R3 and R4 in a descending order are: R4 > R1 > R3.

In some embodiments, the CSI measurement resource with which the eventtriggered CSI report is associated is different from the CSI measurement resource with which the CSI report is associated, and/or the CSI measurement resource with which the event-triggered LTM CSI report is associated is different from the CSI measurement resource with which the LTM CSI report is associated.

For example, the terminal equipment does not expect to be configured with an event-triggered CSI report and a CSI report associated with the same CSI resource configuration ID.

For example, the terminal equipment does not expect to be configured with an event-triggered LTM CSI report and an LTM CSI report associated with the same CSI resource configuration ID.

Thus, a situation where the relationships shown in FIG. 3 and FIG. 4 occur simultaneously may be avoided, and thus there is no need to define behaviors of the terminal equipment for such a situation.

In some embodiments, the event-triggered report does not always take precedence over the network device scheduled report, rather, under certain conditions, the eventtriggered report takes precedence over the network device scheduled report. For example, when report quantities are identical, the priority of the event-triggered CSI report is higher than the priority of the CSI report, and/or, when the report quantities are identical, the priority of the event-triggered LTM CSI report is higher than the priority of the LTM CSI report.

For example, the event-triggered CSI report does not always take precedence over the CSI report, and only when the report quantities of the event-triggered CSI report and the CSI report are taking precedence, does the event-triggered CSI report take precedence over the CSI report. Likewise, this may also be extended to the case where the priorities of the event-triggered LTM CSI report and the LTM CSI report are determined.

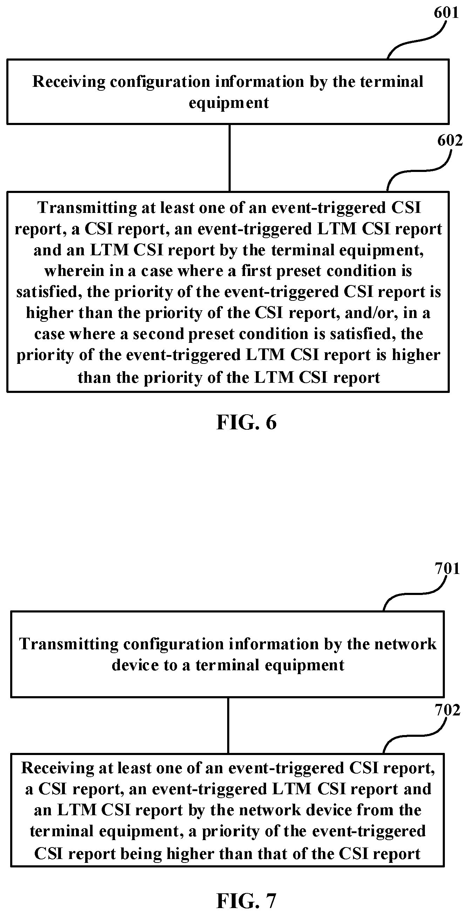

FIG. 6 is a schematic diagram of an implementation of the channel state information reporting method of the embodiment of this disclosure. As shown in FIG. 6, the method includes:
601: receiving configuration information by the terminal equipment; and
602: transmitting at least one of an event-triggered CSI report, a CSI report, an event-triggered LTM CSI report and an LTM CSI report by the terminal equipment,
wherein in a case where a first preset condition is satisfied, the priority of the eventtriggered CSI report is higher than the priority of the CSI report, and/or, in a case where a second preset condition is satisfied, the priority of the event-triggered LTM CSI report is higher than the priority of the LTM CSI report.

In some embodiments, the priority of the LTM CSI report is higher than the priority of the event-triggered CSI report.

In some embodiments, the first preset condition is that the report quantity of the event-triggered CSI report is identical to the report quantity of the CSI report, and/or, the second preset condition is that the report quantity of the event-triggered LTM CSI report is identical to the report quantity of the LTM CSI report.

It can be seen from the above embodiment that the priority of the event-triggered CSI report is higher than the priority of the CSI report. The priority of the LTM CSI report is higher than the priority of the event-triggered CSI report. The priorities are determined according to the priority values, and the priority value of the event-triggered CSI report and the priority value of the CSI report may be jointly calculated or independently calculated. Thus, ambiguities generated in determining priority sizes of the reports may be avoided, thereby avoiding failures in report transmission.

### Embodiment of a second aspect

The embodiment of this disclosure provides a configuration method. This method is applicable to a network device, and corresponds to the channel state information reporting method applicable to a terminal equipment described in the embodiment of the first aspect, and reference may be made to the disclosure contained in the embodiment of the first aspect for identical or corresponding parts.

This method is applicable to a network device, such as the network device 101 in FIG. 1.

FIG. 7 is a schematic diagram of the configuration method of the embodiment of this disclosure. As shown in FIG. 7, the method includes:
701: transmitting configuration information by the network device to a terminal equipment; and
702: receiving at least one of an event-triggered CSI report, a CSI report, an eventtriggered LTM CSI report and an LTM CSI report by the network device from the terminal equipment, a priority of the event-triggered CSI report being higher than that of the CSI report.

In some embodiments, the priority corresponds to a priority value, and the smaller the priority value, the higher the priority.

In some embodiments, the priority of the LTM CSI report is higher than the priority of the event-triggered CSI report.

In some embodiments, the priority of the event-triggered LTM CSI report is higher than the priority of the LTM CSI report.

In some embodiments, the event-triggered CSI report is carried by UCI or a MAC-CE, and/or the event-triggered LTM CSI report is carried by UCI or a MAC-CE.

In the embodiment of this disclosure, reference may be made to relevant description in the embodiment of the first aspect for specific implementations of operations 701 and 702, which shall not be repeated herein any further.

It can be seen from the above embodiment that the priority of the event-triggered CSI report is higher than the priority of the CSI report. The priority of the LTM CSI report is higher than the priority of the event-triggered CSI report. The priorities are determined according to the priority values, and the priority value of the event-triggered CSI report and the priority value of the CSI report may be jointly calculated or independently calculated. Thus, ambiguities generated in determining priority sizes of the reports may be avoided, thereby avoiding failures in report transmission.

### Embodiment of a third aspect

The embodiment of this disclosure provides a channel state information reporting method, applicable to a terminal equipment and a network device, such as the terminal equipment 102 and the network device 101 in FIG. 1. This method corresponds to the channel state information reporting method described in the embodiment of the first aspect and the configuration method described in the embodiment of the second aspect, with identical parts being not going to be described herein any further.

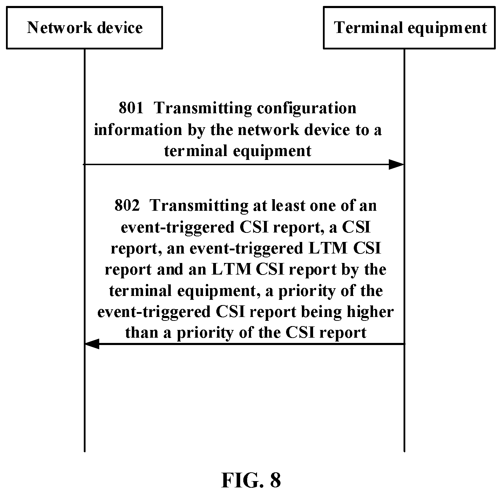

FIG. 8 is an interaction graph of the channel state information reporting method of the embodiment of this disclosure, applicable to a terminal equipment and a network device. As shown in FIG. 8, the method includes:
801: transmitting configuration information by the network device to a terminal equipment; and
802: transmitting at least one of an event-triggered CSI report, a CSI report, an event-triggered LTM CSI report and an LTM CSI report by the terminal equipment, a priority of the event-triggered CSI report being higher than a priority of the CSI report.

In some embodiments, the priority corresponds to a priority value, and the smaller the priority value, the higher the priority.

In some embodiments, the priority of the LTM CSI report is higher than the priority of the event-triggered CSI report.

In some embodiments, the priority of the event-triggered LTM CSI report is higher than the priority of the LTM CSI report.

In some embodiments, the event-triggered CSI report is carried by UCI or a MAC-CE, and/or the event-triggered LTM CSI report is carried by UCI or a MAC-CE.

In the embodiments of this disclosure, reference may be made to the description in the embodiments of the first aspect for specific implementations of operations 801-802, which shall not be repeated herein any further.

It can be seen from the above embodiment that the priority of the event-triggered CSI report is higher than the priority of the CSI report. The priority of the LTM CSI report is higher than the priority of the event-triggered CSI report. The priorities are determined according to the priority values, and the priority value of the event-triggered CSI report and the priority value of the CSI report may be jointly calculated or independently calculated. Thus, ambiguities generated in determining priority sizes of the reports may be avoided, thereby avoiding failures in report transmission.

### Embodiment of a fourth aspect

The embodiment of this disclosure provides a channel state information reporting apparatus, provided in a terminal equipment. As a principle of the apparatus for solving problems is similar to that of the method in the embodiment of the first aspect, reference may be made to the implementation of the method described in embodiment of the first aspect for implementation of the apparatus, with identical or related contents being not going to be described herein any further.

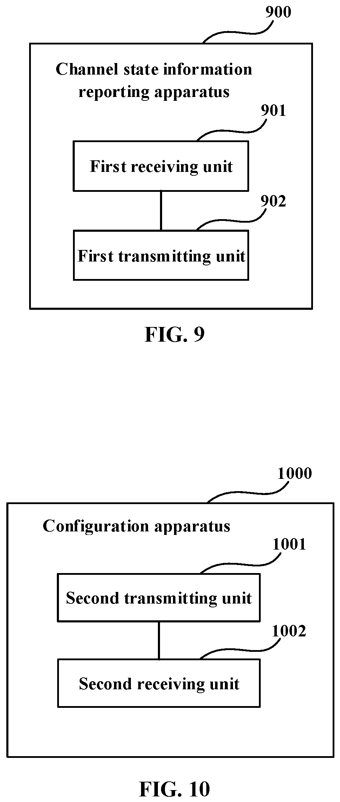

FIG. 9 is a schematic diagram of the channel state information reporting apparatus of the embodiment of this disclosure. As shown in FIG. 9, an apparatus 900 includes:
a first receiving unit 901 configured to receive configuration information; and
a first transmitting unit 902 configured to transmit at least one of an event-triggered CSI report, a CSI report, an event-triggered LTM CSI report and an LTM CSI report, a priority of the event-triggered CSI report being higher than that of the CSI report.

In some embodiments, the priorities correspond to priority values, and the smaller the priority values, the higher the priorities.

In some embodiments, a priority value of the event-triggered CSI report and a priority value of the CSI report are determined according to at least one of a first parameter, a second parameter, a third parameter and a fourth parameter,
wherein the first parameter is determined according to a report type, the second parameter is determined according to a report quantity, the third parameter is determined according to a cell index, and the fourth parameter is determined according to a report configuration number.

In some embodiments, a value of the first parameter of the event-triggered CSI report is different from a value of the first parameter of the CSI report.

In some embodiments, an event-triggered CSI report configuration used to configure the event-triggered CSI report and a CSI report configuration used to configure the CSI report are numbered together.

In some embodiments, the priority value of the event-triggered CSI report is determined according to at least one of a fifth parameter and a sixth parameter, wherein the fifth parameter is determined according to a cell index, and the sixth parameter is determined according to a report configuration number;
and the priority value of the CSI report is determined according to at least one of a seventh parameter, an eighth parameter, a ninth parameter and a tenth parameter, wherein the seventh parameter is determined according to a report type, the eighth parameter is determined according to a report quantity, the ninth parameter is determined according to a cell index, and the tenth parameter is determined according to a report configuration number.

In some embodiments, the event-triggered CSI report configuration used to configure the event-triggered CSI report and the CSI report configuration used to configure the CSI report are numbered separately.

In some embodiments, a priority of the LTM CSI report is higher than that of the event-triggered CSI report.

In some embodiments, a priority of the event-triggered LTM CSI report is higher than that of the LTM CSI report.

In some embodiments, a mapping order of a report is determined according to a priority, or,
when a reported code rate is higher than a threshold, a part of a transmitted report is determined according to a priority,
wherein the report comprises at least one of an event-triggered CSI report, a CSI report, an event-triggered LTM CSI report and an LTM CSI report.

In some embodiments, when the event-triggered CSI report and the CSI report that are associated with the same group of CSI measurement resources need to be transmitted simultaneously, the first transmitting unit transmits the event-triggered CSI report and does not transmit the CSI report, and/or, when the event-triggered LTM CSI report and the LTM CSI report that are associated with the same group of LTM CSI measurement resources need to be transmitted simultaneously, the first transmitting unit transmits the event-triggered LTM CSI report and does not transmit the LTM CSI report.

In some embodiments, the event-triggered CSI report and/or the event-triggered LTM CSI report is/are transmitted via DCI scheduling.

In some embodiments, the event-triggered CSI report is carried by UCI or a MAC-CE, and/or,
the event-triggered LTM CSI report is carried by UCI or a MAC-CE.

In some embodiments, a CSI measurement resource with which the event-triggered CSI report is associated is different from a CSI measurement resource with which the CSI report is associated, and/or,
a CSI measurement resource with which the event-triggered LTM CSI report is associated is different from a CSI measurement resource with which the LTM CSI report is associated.

It can be seen from the above embodiment that the priority of the event-triggered CSI report is higher than the priority of the CSI report. The priority of the LTM CSI report is higher than the priority of the event-triggered CSI report. The priorities are determined according to the priority values, and the priority value of the event-triggered CSI report and the priority value of the CSI report may be jointly calculated or independently calculated. Thus, ambiguities generated in determining priority sizes of the reports may be avoided, thereby avoiding failures in report transmission.

### Embodiment of a fifth aspect

The embodiment of this disclosure provides a configuration apparatus, applicable to a network device. As a principle of the apparatus for solving problems is similar to that of the method in the embodiment of the second aspect, reference may be made to the implementation of the method described in embodiment of the second aspect for implementation of the apparatus, with identical or related contents being not going to be described herein any further.

FIG. 10 is a schematic diagram of the configuration apparatus of the embodiment of this disclosure. As shown in FIG. 10, an apparatus 1000 includes:
a second transmitting unit 1001 configured to transmit configuration information to a terminal equipment; and
a second receiving unit 1002 configured to receive at least one of an event-triggered CSI report, a CSI report, an event-triggered LTM CSI report and an LTM CSI report from the terminal equipment, a priority of the event-triggered CSI report being higher than that of the CSI report.

In some embodiments, the priorities correspond to priority values, and the smaller the priority values, the higher the priorities.

In some embodiments, a priority of the LTM CSI report is higher than that of the event-triggered CSI report.

In some embodiments, a priority of the event-triggered LTM CSI report is higher than that of the LTM CSI report.

1In some embodiments, the event-triggered CSI report is carried by UCI or a MAC-CE, and/or,
the event-triggered LTM CSI report is carried by UCI or a MAC-CE.

It can be seen from the above embodiment that the priority of the event-triggered CSI report is higher than the priority of the CSI report. The priority of the LTM CSI report is higher than the priority of the event-triggered CSI report. The priorities are determined according to the priority values, and the priority value of the event-triggered CSI report and the priority value of the CSI report may be jointly calculated or independently calculated. Thus, ambiguities generated in determining priority sizes of the reports may be avoided, thereby avoiding failures in report transmission.

### Embodiment of a sixth aspect

The embodiment of this disclosure provides a terminal equipment, including the channel state information reporting apparatus described in the embodiment of the fourth aspect.

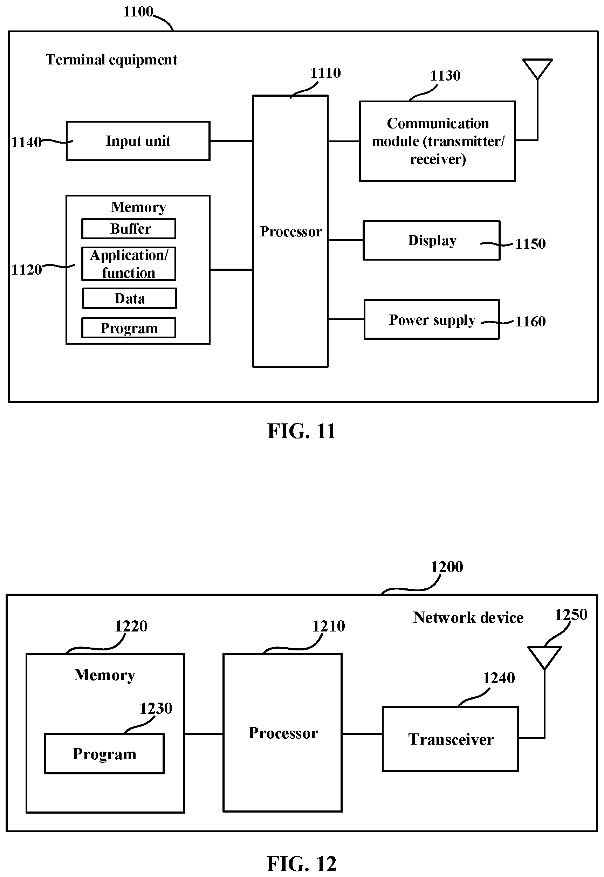

FIG. 11 is a block diagram of a systematic structure of the terminal equipment of the embodiment of this disclosure. As shown in FIG. 11, a terminal equipment 1100 may include a processor 1110 and a memory 1120, the memory 1120 being coupled to the processor 1110. It should be noted that this figure is illustrative only, and other types of structures may also be used, so as to supplement or replace this structure and achieve a telecommunications function or other functions.

In one implementation, the functions of the channel state information reporting apparatus may be integrated into the processor 1110.

The processor 1101 may be configured to: receive configuration information; and transmit at least one of an event-triggered CSI report, a CSI report, an event-triggered LTM CSI report and an LTM CSI report, a priority of the event-triggered CSI report being higher than that of the CSI report.

In another implementation, the channel state information reporting apparatus and the processor 1110 may be configured separately; for example, the channel state information reporting apparatus may be configured as a chip connected to the processor 1110, and the functions of the channel state information reporting apparatus are executed under control of the processor 1110.

As shown in FIG. 11, the terminal equipment 1100 may further include a communication module 1130, an input unit 1140, a display 1150, and a power supply 1160. It should be noted that the terminal equipment 1100 does not necessarily include all the parts shown in FIG. 11, and the above components are not necessary. Furthermore, the terminal equipment 1100 may include parts not shown in FIG. 11, and the related art may be referred to.

As shown in FIG. 11, the processor 1110 is sometimes referred to as a controller or an operational control, which may include a microprocessor or other processor devices and/or logic devices. The processor 1110 receives input and controls operations of components of the terminal equipment 1100.

Wherein, the memory 1120 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1110 may execute programs stored in the memory 1120, so as to realize information storage or processing, etc. Functions of other parts are similar to those of the related art, which shall not be described herein any further.

It can be seen from the above embodiment that the priority of the event-triggered CSI report is higher than the priority of the CSI report. The priority of the LTM CSI report is higher than the priority of the event-triggered CSI report. The priorities are determined according to the priority values, and the priority value of the event-triggered CSI report and the priority value of the CSI report may be jointly calculated or independently calculated. Thus, ambiguities generated in determining priority sizes of the reports may be avoided, thereby avoiding failures in report transmission.

### Embodiment of a seventh aspect

The embodiment of this disclosure provides a network device, including the configuration apparatus described in the embodiment of the fifth aspect.

FIG. 12 is a schematic diagram of a systematic structure of the network device of the embodiment of this disclosure. As shown in FIG. 12, a network device 1200 may include a processor 1210 and a memory 1220, the memory 1220 being coupled to the processor 1210. Wherein, the memory 1220 may store various data, and furthermore, it may store a program 1230 for data processing, and execute the program 1230 under control of the processor 1210, so as to receive various information transmitted by a terminal equipment, and transmit various information to the terminal equipment.

In one implementation, the functions of the configuration apparatus may be integrated into the processor 1210.

The processor 1210 may be configured to: transmit configuration information to a terminal equipment; and receive at least one of an event-triggered CSI report, a CSI report, an event-triggered LTM CSI report and an LTM CSI report from the terminal equipment, a priority of the event-triggered CSI report being higher than that of the CSI report.

In another implementation, the configuration apparatus and the processor 1210 may be configured separately; for example, the configuration apparatus may be configured as a chip connected to the processor 1210, and the functions of the configuration apparatus are executed under control of the processor 1210.

Furthermore, as shown in FIG. 12, the network device 1200 may include a transceiver 1240, and an antenna 1250, etc. Wherein, functions of the above components are similar to those in the related art, and shall not be described herein any further. It should be noted that the network device 1200 does not necessarily include all the parts shown in FIG. 12. Furthermore, the network device 1200 may include parts not shown in FIG. 12, and the related art may be referred to.

It can be seen from the above embodiment that the priority of the event-triggered CSI report is higher than the priority of the CSI report. The priority of the LTM CSI report is higher than the priority of the event-triggered CSI report. The priorities are determined according to the priority values, and the priority value of the event-triggered CSI report and the priority value of the CSI report may be jointly calculated or independently calculated. Thus, ambiguities generated in determining priority sizes of the reports may be avoided, thereby avoiding failures in report transmission.

### Embodiment of an eighth aspect

The embodiment of this disclosure provides a communication system, including the terminal equipment described in the embodiment of the sixth aspect and/or the network device described in the embodiment of the seventh aspect, and reference may be made to the embodiment of the sixth aspect and the embodiment of the seventh aspect for specific contents.

For example, reference may be made to FIG. 1 for a structure of the communication system. As shown in FIG. 1, the communication system 100 includes the network device 101 and the terminal equipment 102. The terminal equipment 102 may be identical to the terminal equipment described in the embodiment of the sixth aspect, and/or, the network device 101 may be identical to the network device described in the embodiment of the seventh aspect, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 9 may either correspond to software modules of procedures of a computer program, or correspond to hardware modules. Such software modules may respectively correspond to the steps shown in FIG. 2. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 9 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 9 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

According to the implementations disclosed in the embodiments of this disclosure, following supplements are further disclosed.
1. A channel state information (CSI) reporting method, including:
   receiving configuration information by a terminal equipment; and
   transmitting at least one of an event-triggered CSI report, a CSI report, an eventtriggered LTM CSI report or an LTM CSI report by the terminal equipment,
   when a first preset condition is satisfied, the priority of the event-triggered CSI report is higher than that of the CSI report, and/or, when a second preset condition is satisfied, a priority of the event-triggered LTM CSI report is higher than that of the LTM CSI report.
2. The method according to supplement 1, wherein,
   the priority of the LTM CSI report is higher than that of the event-triggered CSI report.
3. The method according to supplement 1, wherein,
   the first preset condition is that a report quantity of the event-triggered CSI report is identical to a report quantity of the CSI report, and/or, the second preset condition is that a report quantity of the event-triggered LTM CSI report is identical to a report quantity of the LTM CSI report.

## Claims

1. A channel state information (CSI) reporting apparatus, provided in a terminal equipment, the apparatus comprising:
a first receiving unit configured to receive configuration information; and
a first transmitting unit configured to transmit at least one of an event-triggered CSI report, a CSI report, an event-triggered LTM CSI report or an LTM CSI report, a priority of the event-triggered CSI report being higher than that of the CSI report.

2. The apparatus according to claim 1, wherein,
the priority corresponds to a priority value,
and the smaller the priority value, the higher the priority.

3. The apparatus according to claim 1, wherein,
a priority value of the event-triggered CSI report and a priority value of the CSI report are determined according to at least one of a first parameter, a second parameter, a third parameter or a fourth parameter,
the first parameter is determined according to a report type, the second parameter is determined according to a report quantity, the third parameter is determined according to a cell index, and the fourth parameter is determined according to a report configuration number.

4. The apparatus according to claim 3, wherein,
a value of the first parameter of the event-triggered CSI report is different from a value of the first parameter of the CSI report.

5. The apparatus according to claim 3, wherein,
an event-triggered CSI report configuration used to configure the event-triggered CSI report and a CSI report configuration used to configure the CSI report are numbered together.

6. The apparatus according to claim 1, wherein,
a priority value of the event-triggered CSI report is determined according to at least one of a fifth parameter or a sixth parameter, the fifth parameter is determined according to a cell index, and the sixth parameter is determined according to a report configuration number;
a priority value of the CSI report is determined according to at least one of a seventh parameter, an eighth parameter, a ninth parameter or a tenth parameter, the seventh parameter is determined according to a report type, the eighth parameter is determined according to a report quantity, the ninth parameter is determined according to a cell index, and the tenth parameter is determined according to a report configuration number.

7. The apparatus according to claim 6, wherein,
an event-triggered CSI report configuration used to configure the event-triggered CSI report and a CSI report configuration used to configure the CSI report are numbered separately.

8. The apparatus according to claim 1, wherein,
a priority of the LTM CSI report is higher than that of the event-triggered CSI report.

9. The apparatus according to claim 1, wherein,
a priority of the event-triggered LTM CSI report is higher than that of the LTM CSI report.

10. The apparatus according to claim 1, wherein,
a mapping order of a report is determined according to a priority, or,
when a reported code rate is higher than a threshold, a part of a transmitted report is determined according to a priority,
the report comprises at least one of the event-triggered CSI report, the CSI report, the event-triggered LTM CSI report or the LTM CSI report.

11. The apparatus according to claim 1, wherein,
when the event-triggered CSI report and the CSI report that are associated with a same group of CSI measurement resources need to be transmitted simultaneously, the first transmitting unit transmits the event-triggered CSI report and does not transmit the CSI report, and/or, when the event-triggered LTM CSI report and the LTM CSI report that are associated with a same group of LTM CSI measurement resources need to be transmitted simultaneously, the first transmitting unit transmits the event-triggered LTM CSI report and does not transmit the LTM CSI report.

12. The apparatus according to claim 1, wherein,
the event-triggered CSI report and/or the event-triggered LTM CSI report is/are transmitted via DCI scheduling.

13. The apparatus according to claim 1, wherein,
the event-triggered CSI report is carried by UCI or a MAC-CE, and/or
the event-triggered LTM CSI report is carried by UCI or a MAC-CE.

14. The apparatus according to claim 1, wherein,
a CSI measurement resource with which the event-triggered CSI report is associated is different from a CSI measurement resource with which the CSI report is associated, and/or
a CSI measurement resource with which the event-triggered LTM CSI report is associated is different from a CSI measurement resource with which the LTM CSI report is associated.

15. A configuration apparatus, provided in a network device, the apparatus comprising:
a second transmitting unit configured to transmit configuration information to a terminal equipment; and
a second receiving unit configured to receive at least one of an event-triggered CSI report, a CSI report, an event-triggered LTM CSI report or an LTM CSI report from the terminal equipment, a priority of the event-triggered CSI report being higher than that of the CSI report.

16. The apparatus according to claim 15, wherein,
t the priority corresponds to a priority value,
and the smaller the priority value, the higher the priority.

17. The apparatus according to claim 15, wherein,
a priority of the LTM CSI report is higher than that of the event-triggered CSI report.

18. The apparatus according to claim 17, wherein,
a priority of the event-triggered LTM CSI report is higher than that of the LTM CSI report.

19. The apparatus according to claim 15, wherein,
the event-triggered CSI report is carried by UCI or a MAC-CE, and/or
the event-triggered LTM CSI report is carried by UCI or a MAC-CE.

20. A communication system, comprising a network device and/or a terminal equipment,
the terminal equipment comprising the apparatus as claimed in claim 1,
and the network device comprising the apparatus as claimed in claim 15.
